# EUROPEAN PATENT SPECIFICATION

(11) **EP 0 520 669 B1**
(45) Date of publication and mention of the grant of the patent: **07.06.1995**
(21) Application number: 92305514.9
(22) Date of filing: 16.06.1992
(51) Int. Cl.: G06K 11/08

(54) **Touch input device**
Berührungsempfindliche Eingabevorrichtung
Dispositif d'entrée tactile

(30) Priority: 28.06.1991 US 723347
(43) Date of publication of application: 30.12.1992
(73) Proprietor: International Business Machines Corporation, Armonk, N.Y. 10504 (US)
(72) Inventor: Williams, Donald Dorsey, Boca Raton, Florida 33432 (US)
(74) Representative: Burt, Roger James, Dr.

(56) References cited:
- EP-A- 0 304 820
- US-A- 4 386 836
- US-A- 4 766 424

## Description

The present invention generally relates to touch input devices and particularly relates to opto-matrix frames having a minimum component count.

Historically, keyboards were used to interact with display devices. Due to the needs of particular users, a number of alternative methods of interacting with display devices were developed. Included in the alternatives were items such as mice light pens, tablets, joysticks, and the like. All of these methods have the disadvantage of requiring hardware extraneous to the display. The development of touch panel displays provided an alternative method of interacting with a display device which has the additional advantage of not requiring hardware extraneous to the display. Touch panel displays allow a user to interact by first presenting information on the screen. Then the user interacts by touching the screen at locations based on information displayed on the screen. The touch panel senses the location of the finger or stylus and communicates that information to the computer.

There are known alternative methods of designing touch panel displays. One method uses a transparent membrane switch which covers the surface of the display screen. Over time, the membrane design creates vision problems for the user. This is because the membrane lies directly over the screen. Therefore, membrane wear will have a direct effect on how well a user can see the display. A preferable method is the opto-matrix display. This type of touch panel display places nothing on the surface of the screen, eliminating the problems caused by membrane wear. Further, the frequency of energy used can be selected so that it is outside of the visible light range, thereby rendering the matrix invisible to the user.

However, a disadvantage associated with opto-matrix touch panel displays is the high component count and consequent high manufacturing expense. For example, a large number of light emitting diodes (emitters) are required to create the optical matrix. A correspondingly large number of detectors, paired with corresponding emitters, are required to detect light, or its absence, in the matrix. Further, scanning the emitters and monitoring the detectors typically requires significant on-board processing capability to scan the emitter/detector pairs, measure the difference between detector output before and after the emitter is turned on, and determine if a stylus is present at a given location. Touch panel displays also include digital to analog converters to allow data to be converted prior to being transferred to computers. Due to the difference in strength of emitter signals and the difference in sensitivity of detector output, errors can arise in the form of false stylus detection or failure to detect a stylus when present. Addressing the problems created by the difference in emitter/detector signals results in additional hardware.

Some attempts have been made to reduce the number of emitters and detectors required for the optical matrix in the display. For example, U.S. patent 4,733,068 to Sherbeck discloses a method of reducing the number of emitters by placing emitters in the corners of the bezel with a plurality of detectors on opposing sides of the bezel. This approach allows the number of emitters to be reduced, but at the same time prevents any reduction in the number of detectors. Likewise, U.S. patent 4,766,424 to Adler et al uses a similar approach by attaching a diode connected to a light conducting strip to two sides of the bezel and exciting them with a plurality of emitters on the other two sides of the bezel. This approach allows the number of detectors to be reduced but prevents any reduction in the number of emitters. As a result, while attempts to reduce the number of emitters and detectors have been successful, the very solutions to the problem of reducing the number of emitters prevents reduction in the number of detectors, and the solution to the problem of reducing the number of detectors has prevented the reduction of both emitters. Therefore, the prior art has not shown the ability to reduce the number of emitters and detectors at the same time.

EP-A-0 304 820 describes an optical device for detecting the position of an input member within a predetermined field comprising: a frame having first and second pair of orthogonal sides; energy emitter means in the form of a pair a fluorescent tube lamps; energy detector means in the form of a pair of elongated photo-detectors; a first mask comprising a linear array of addressable mask elements interposed between a first pair of opposite sides of the frame; a second mask comprising a linear array of addressable mask elements interposed between a second pair of opposite sides of the frame; and a multiplexer connected to the masks for selectively addressing the elements of the first and second masks to allow or block transmission of energy from the emitter means across the field to the energy detector means, the energy detector means identifying the position within the field of an input member by an absence of detected energy.

The prior art has failed to provide a touch panel input device that not only has the known advantages of opto-matrix displays, such as the absence or extraneous hardware, and the superior visual qualities of opto-matrix touch panels over membrane touch panel input devices, but one which also overcomes the disadvantages of known opto-matrix touch panel devices, which results in high cost primarily due to the number of components required to implement such a device and in particular due to the large number of emitters and detectors required to operate an optical touch panel display, and the additional circuitry required to correct differences in signal strength of emitters and detectors.

In accordance with the present invention, there is now provided an optical device for detecting the position of an input member within a predetermined field, the device comprising: a frame having first and second pair of orthogonal sides; energy emitter means; energy detector means; a first mask comprising a linear array of addressable mask elements interposed between a first pair of opposite sides of the frame; a second mask comprising a linear array of addressable mask elements interposed between a second pair of opposite sides of the frame; and a multiplexer connected to the masks for selectively addressing the elements of the first and second masks to allow or block transmission of energy from the emitter means across the field to the energy detector means, the energy detector means identifying the position within the field of an input member by an absence of detected energy; characterised in that: the energy emitter means comprises a single energy emitter; the energy detector means comprises a single energy detector; and the device comprises a first energy guide connected at one end to the single emitter and extending along the first pair of orthogonal sides for transporting energy from the single emitter to the first pair of orthogonal sides, and a second energy guide connected at one end to the single detector and extending along the second pair of orthogonal sides for transporting energy from the second pair of orthogonal sides to the signal detector.

Viewing a second aspect of the present invention, there is now provided a optical input device for detecting and communicating to a computer the position of an input member within a predetermined field, said optical input device comprising: a frame having a first vertical side, a second vertical side, a first horizontal side, and a second horizontal side; an energy emitter; an energy detector; an energy guide having first and second energy paths, the input of the first energy path connected to the energy emitter and the output of the first energy path connected to the first vertical and horizontal sides of the frame, the input of the second energy path connected to the second vertical and horizontal sides of the frame and the output of the second energy path connected to the energy detector; a vertical mask between the first and second vertical sides of the frame; a horizontal mask between the first and second horizontal sides of the frame; a multiplexor having means to selectively control energy transmission through said vertical and horizontal masks; whereby the computer determines the location of an input member by detecting the absence of detected energy when energy transmission is selectively controlled.

This advantageously reduces the number of components in an optical input device to a number heretofore unattainable.

The present invention thus advantageously reduces the required number of emitters and detectors in an optical input device to one each.

In a preferred embodiment of the present invention, there is provided an optical input device for detecting and communicating to a computer the location of an input member within a predetermined field, comprising: a frame; the frame further comprising a first vertical side, a second vertical side, a first horizontal side, and a second horizontal side; an energy emitter; an energy detector; a fiber optic bundle; the fiber optic bundle having a first energy path connected at one end to the energy emitter such that energy from the energy emitter enters the first energy path and travels through the fibers of the energy path; the first energy path connected at the other end to the first horizontal side and the first vertical side such that the first horizontal side and the first vertical side do not obstruct the energy when the energy exits the first energy path; the fibers in the first energy path further arranged such that energy exiting the first energy path is transmitted from a wide area of the first horizontal side and the first vertical side substantially perpendicular to the surfaces of the first horizontal side and the first vertical side, and toward the second horizontal side and the second vertical side respectively; the fiber optic bundle having a second energy path connected at one end to the second horizontal side and the second vertical side, the fibers in the second energy path arranged such that energy received along a wide area of the second horizontal side from the first horizontal side, and energy received along a wide area of the second vertical side from the first vertical. side enter the fibers; the second energy path connected at the other end to the energy detector such that energy travelling through the second energy path is detected by the energy detector; the energy detector further having means to provide a signal to the computer indicating the presence or absence of energy; first and second vertical LCD masks attached respectively to the first and second vertical sides of the frame, the masks arranged such that they lie in the path of energy transmitted from the first vertical side to the second vertical side; first and second horizontal LCD masks attached respectively to the first and second horizontal sides of the frame, the masks arranged such that they lie in the path of energy transmitted from the first horizontal side to the second horizontal side; a multiplexor having means to receive control signals from the computer; the multiplexor having means to synchronously scan the first and second vertical LCD masks such that only a narrow beam of energy can travel from the first vertical side to the second vertical side at any point in time; the multiplexor having means to synchronously scan the first and second horizontal LCD masks such that only a narrow beam of energy can travel from the first horizontal side to the second horizontal side at any point in time; the multiplexor having means to mask all first and second horizontal LCD masks when the first and second vertical LCD masks are scanned, and mask all first and second vertical LCD masks when the first and second horizontal LCD masks are scanned.

The present invention also extends to a method for detecting and communicating to a computer the location of an input member within a predetermined field, the method including defining the field using a frame having first and second pairs of orthogonal sides; interposing a first mask comprising a linear array of addressable mask elements between a first pair of opposite sides of the frame; interposing a second mask comprising a linear array of addressable mask elements between a second pair of opposite sides of the frame; selectively addressing, using a multiplexor, the elements of the first and second masks to allow or block transmission of energy across the field; and identifying, the position within the field of an input member by an absence of detected energy.

The method characterised by: transporting, along a first energy guide connected at one end to a single emitter and extending along the first pair of orthogonal sides, energy from the emitter to the first pair of orthogonal sides; and transporting, along a second energy guide connected at one end to a single detector and extending along the second pair of orthogonal sides, energy from the second pair of orthogonal sides to the detector.

The present invention further extends to a system for detecting and communicating to a computer the position of an input member within a predetermined field, said device comprising: a computer; and an optical input device; further comprising: at least one energy emitter; at least one energy detector having means for outputting a signal to indicate the presence of detected energy; a frame having a first vertical side, a second vertical side, a first horizontal side, and a second horizontal side, each of the sides capable of conducting energy emitted from the energy emitter; an energy guide having first and second energy paths, the first energy path having an input end for receiving energy from the energy emitter and an output end connected to the first vertical and horizontal sides of the frame for outputting the energy through the first vertical and horizontal sides of the frame, the second energy path having an input end connected to the second vertical and horizontal sides of the frame for receiving energy outputted from the first energy path and an output end for outputting energy to the energy detector; an output mask for blocking energy output from the first energy path; an input mask for blocking energy from entering the second energy path; and multiplexor means to selectively control energy transmission from the first sides of the frame to the second sides of the frame by selectively unblocking portions of the output mask and portions of the input mask which are opposed from one another on opposite sides of the frame; whereby the computer determines the location of an input member by detecting the absence of energy when said energy mask is selectively unblocked.

The present invention still further extends to an optical input device for locating the position of an input member within a predetermined field, comprising: a frame for defining a predetermined field, the frame having a first vertical side, a second vertical side, a first horizontal side, and a second horizontal side; an energy emitter; a first group of fiber-optic fibers for distributing energy along the first vertical and first horizontal sides the fibers in the first group aligned such that energy is transmitted across the predetermined field in the form of a matrix; an energy detector; a second group of fiber-optic fibers for receiving energy along the second vertical and second horizontal sides and connected to the energy detector, the fibers in the group aligned such that energy in substantially all of the matrix can be detected; a scannable mask for blocking energy in the matrix such that only a single beam of energy is allowed to cross from the first horizontal and vertical sides at any point in time; a multiplexor for controlling the location of the unblocked portion of the scannable mask; calculating means to determine the location of the intersection of the horizontal and vertical energy beams interrupted by a stylus; whereby the location of an input member in a predetermined field can be determined by an optical device with a single emitter and a single detector.

In a particular preferred embodiment of the present invention, there is provided a system which uses a fiber optic bundle to transmit energy from a single energy source such as an emitter to the sides of a bezel and return detected energy from opposite sides of the bezel to a single detector. A transparent window in a darkened LCD mask is scanned across the mask to move a beam of energy across the vertical and horizontal planes of the display.

A preferred embodiment of the present invention will now be described, by way of example only, with reference to the accompanying drawings, in which:
Fig. 1 is a diagram showing an example of a prior art approach to optical touch panels;
Fig. 2 shows a diagram of the components necessary to implement the invention and their arrangement; and
Fig. 3 is a simplified time diagram showing the movement of the energy beam across the display.

For ease of discussion, the following terms will be used in this disclosure. The term "opto-matrix input device" will be used interchangeably with the term "touch panel" and "optical input device". The term "opaque point" will be used interchangeably with the term "stylus." The term "light" will be used interchangeably with "energy" or "emitted energy" or "infra-red". A stylus can be anything used to block the energy beam between an emitter and a detector, such as a finger, pencil, or the like.

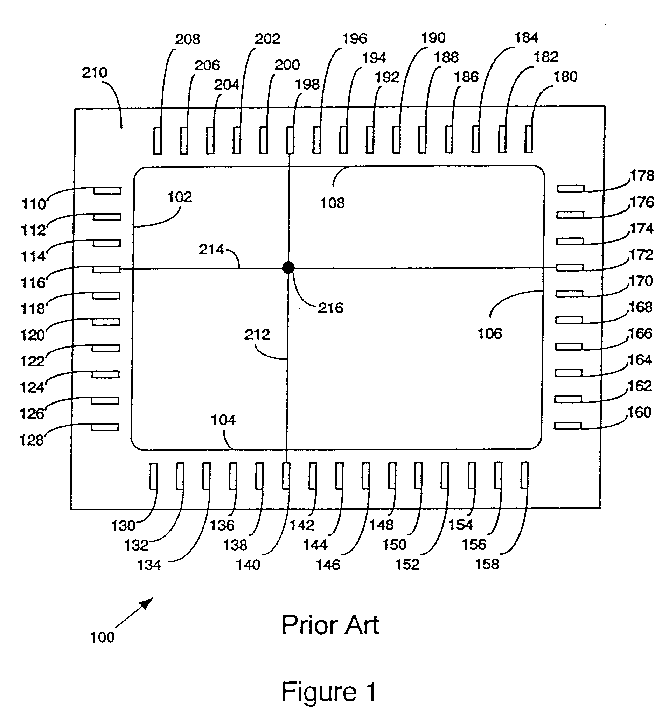

To better understand the advantages of the present invention, a brief discussion of a typical prior art approach, as illustrated in Figure 1, will be presented.

Referring to Fig. 1, the arrangement of components around the front of a touch panel display bezel 100 are shown. The bezel 100 has left vertical side 102, a right vertical side 106, a lower horizontal side 104, and an upper horizontal side 108. Each side has a surface wide enough to allow placement of emitters 110-158 and detectors 160-208 to be mounted under the top surface 210 of the bezel 100. The vertical and horizontal sides 102, 106, 104, 108, respectively are made from material which allows transmitted energy to pass through, thereby allowing an emitter 110-158 on one side of the bezel 100 to activate a corresponding detector 160-208 on the opposite side of the bezel. Each emitter is paired with the detector placed directly opposite it in the bezel. By using conventional multiplexing techniques, the emitter/detector pairs can be scanned one at a time to determine if a stylus (not shown) is blocking light transmitted from the emitter to the detector.

By way of example, if a stylus was placed on the touch panel at location 216, then the light beam 212 from emitter 140 would be prevented from reaching detector 198. Likewise, the light beam 214 from emitter 116 would be prevented from reaching detector 172. As is well known in the art, the location 216 of the stylus can be determined by a simple process of calculation.

In order to determine the location of a stylus, prior art systems require many emitter/detector pairs along with other support circuitry (for example, circuitry required to compensate for imbalances in emitter output or detector sensitivity as well as circuitry required to detect and/or correct defective emitters and detectors). As shown below, the instant invention eliminates the need for all but a single emitter/detector pair as well as the support circuitry the additional emitters and detectors would require.

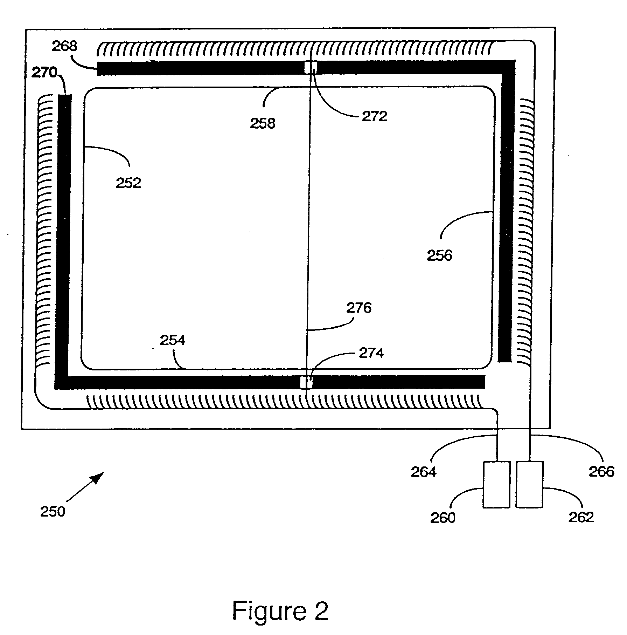

Turning now to the invention, Figure 2 shows the basic structure of the invention. As in prior art touch panel displays, the components required to implement the invention are integrated into the bezel 250. The bezel 250 also is formed in the same manner as prior art systems with inner surfaces comprised of a left vertical side 252, a right vertical side 256, a lower horizontal side 254, and an upper horizontal side 258. The bezel sides 252-258 are also manufactured from material which can transmit light to enable energy transfer across the predetermined field bounded by the bezel 250.

The light source consists of a single emitter 260. Emitter 260 is activated continuously. The energy output by the emitter 260 enters an emitter fiber-optic bundle 264. The fibers in emitter fiber-optic bundle 264 are distributed around one horizontal side and one vertical side of the bezel 250. In the preferred embodiment, the fibers in emitter fiber-optic bundle 264 are distributed around the lower horizontal side 254 and the left vertical side 252 such that light output from the fibers can illuminate the upper horizontal side 258 and the right vertical side 256 respectively. Those skilled in the art will recognize that while the invention can be implemented with the fibers in emitter fiber-optic bundle 264 arranged around the upper horizontal side 258 rather than the lower horizontal side 254, using the lower horizontal side 254 avoids any interference from extraneous light energy. This is because overhead lighting in an office would provide more extraneous light (i.e., noise) if the fibers in detector fiber-optic bundle 266, used for receiving light, were in the lower horizontal side 254. The choice of left vertical side 252 versus right vertical side 256 for the fibers in emitter fiber-optic bundle 264 is not important. In addition, each fiber can be formed with a lens on the end of the fibers to focus the light such that a more precise beam is directed from one side of the bezel 250 to the other.

In a similar fashion, the fibers in detector fiber-optic bundle 266 are arranged around the upper horizontal side 258 and right vertical side 256. Light output by the fibers in emitter fiber-optic bundle 264 are aimed at fibers which are located directly across from the emitting fibers. The fibers in detector fiber-optic bundle 266 receive light from the emitter fiber-optic bundle 264 and output that light to detector 262. For ease of illustration, the circuitry used to power the emitter 260 and monitor the output of the detector 262 have been omitted since that circuitry is old and well known in the art. Those skilled in the art will recognize that while two fiber-optic bundles 264, 266, are shown, a single bundle whose fibers are appropriately routed could easily replace the two fiber-optic bundles 264, 266, shown. In addition, the emitter 260 and the detector 262 are shown outside of the bezel 250 for ease of illustration, but can easily be mounted in the bezel or elsewhere in the display.

Emitter LCD mask 270 is interposed between the output of emitter fiber-optic bundle 264 and both left vertical side 252 and lower horizontal side 254. Likewise, detector LCD mask 268 is interposed between the input of detector fiber-optic bundle 266 and both right vertical side 256 and upper horizontal side 258. Without the LCD masks 268, 270, light would be transmitted along the length of both the vertical sides 252, 256, and horizontal sides 254, 258, which would make determination of the location of a stylus impossible.

For ease of illustration, the multiplexor circuitry (which is old and well known in the art) used to control the LCD mask is not shown. The LCD masks 268, 270, are kept in a darkened state to prevent light from crossing from left vertical side 252 to right vertical side 256, and to prevent light from crossing from lower horizontal side 254 to upper horizontal side 258. In other words the LCD masks block energy transmission. The multiplexor circuitry scans a transparent window across the LCD masks by unblocking a small segment (i.e., turning a small segment of the LCD mask transparent) of the LCD mask to create a small window in each LCD mask 268, 270 and synchronously moving the window across the length of the mask. As shown, emitter LCD mask 270 has a small window 274. Likewise, detector LCD mask 268 has a small window 272. The multiplexor circuitry controls the movement of windows 272, 274 such that they are located directly across from one another as they scan across the length of the LCD mask. By synchronously scanning the windows 272, 274, a narrow beam of light 276 can be scanned across the display in alternating horizontal and vertical directions with a single emitter/detector pair.

Those skilled in the art will recognize that several variations in the scanning process can be made. For example, scanning can vary in frequency by increasing the scan rate when a stylus is detected. Likewise, adjacent window locations can be skipped until a stylus is detected and then scanning adjacent locations to determine the exact location of the stylus.

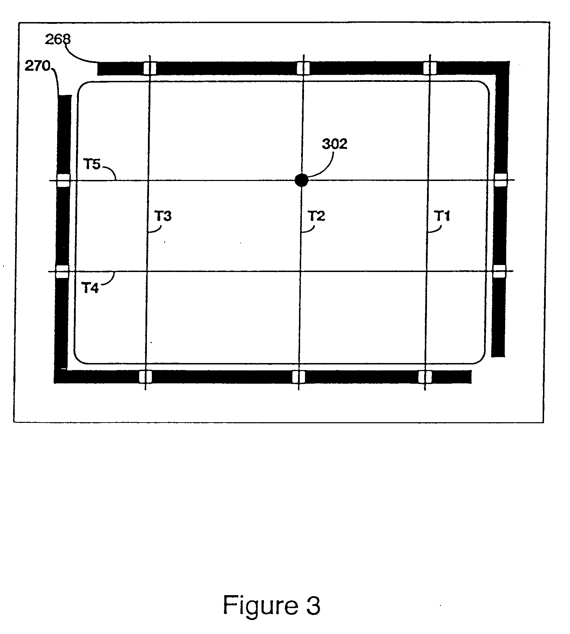

Figure 3 is a time diagram which shows the movement of the window across the LCD masks 269, 270. For illustrative purposes, five time points, T1 through T5 are shown. At time T1, the energy beam is vertical and located on the right side of tie display. The multiplexor scans the LCD masks 268, 270 such that the window moves to the left. At time T2, the window has moved farther to the left. At time T3, the window has moved still farther. This process continues until the window, and with it the energy beam, scans the entire width of the display. When the energy beam reaches the left side of the display, the multiplexor begins to scan the windows up the length of the vertical sides of the display. At time T4, the energy beam is shown at the lower portion of the display. Later, at time T5, the window has scanned upward to location T5. At the completion of one full scan, the energy beam will have covered the display area entirely, both in the vertical and horizontal directions.

The location of a stylus is shown at 302. During the vertical portion of the scan, the circuitry attached to the detector 262 (shown in Figure 2) would recognize the absence of energy at time T2. Likewise, during the horizontal portion of the scan, at time T5, the circuitry controlling the detector 262 would also recognize the absence of energy. Calculation of the location of the stylus at 302 from the location of the beams at times T2 and T5 can easily be done by techniques well known in the art.

While the invention has been described with respect to a preferred embodiment thereof, it will be understood by those skilled in the art that various changes in detail my be made therein without departing from the spirit, scope, and teaching of tie invention. For example, although two masks were used in the preferred embodiment the invention could be implemented with a single mask over the detector fiber-optic bundle. Two or more emitters can be used to provide light, thereby increasing display reliability by allowing defective emitter replacement during scheduled maintenance periods. For the same reason, two or more detectors can be used. Separate multiplexor circuits for the horizontal and vertical portions of the masks would allow simultaneous vertical and horizontal scans, thereby increasing scan, rates. The invention can be implemented on a display with an integrated bezel or on a bezel which is a self-contained unit that can be attached to a separate display device.

## Claims

1. An optical device for detecting the position of an input member within a predetermined field, the device comprising: a frame having first and second pair of orthogonal sides; energy emitter means (260); energy detector means (262); a first mask (268) comprising a linear array of addressable mask elements interposed between a first pair of opposite sides of the frame; a second mask (270) comprising a linear array of addressable mask elements interposed between a second pair of opposite sides of the frame; and a multiplexor connected to the masks for selectively addressing the elements of the first and second masks to allow or block transmission of energy from the emitter means (260) across the field to the energy detector means (262), the energy detector means (262) identifying the position within the field of an input member by an absence of detected energy; characterised in that: the energy emitter means (260) comprises a single energy emitter (260); the energy detector means (262) comprises a single energy detector (262); and the device comprises a first energy guide (264) connected at one end to the single emitter (260) and extending along the first pair of orthogonal sides for transporting energy from the single emitter (260) to the first pair of orthogonal sides, and a second energy guide (266) connected at one end to the single detector (262) and extending along the second pair of orthogonal sides for transporting energy from the second pair of orthogonal sides to the signal detector (262).

2. An optical input device, as claimed in claim 1, wherein the multiplexor further comprises: means for synchronously scanning the first mask to allow one beam of energy to travel between the first pair of opposite sides at any point in time; and means for synchronously scanning the second mask such that only a narrow beam of energy can travel between the second pair of opposite sides at any point in time.

3. An optical input device, as claimed in 2, wherein the multiplexor further comprises: means for receiving control signals from a computer; means for controlling selective energy transmission through the first and second masks as a function of the control signals received from the computer.

4. An optical input device, as claimed in claim 3, wherein the multiplexor further comprises:
means for masking all of the second pair of opposite sides when the first mask is scanned, and for masking all of the first pair of opposite sides when the second mask is scanned.

5. An optical input device, as claimed in claim 1, wherein the first and second masks are LCD circuits.

6. An optical input device, as claimed in claim 5, wherein the first mask comprises:
first and second linear arrays of mask elements attached respectively to each of the first pair of opposite sides of the frame, the arrays arranged such that they lie in the path of energy transmitted from one of the first pair of opposite sides; and wherein the second mask comprises first and second linear arrays of mask elements attached respectively to each of the second pair of opposite sides of the frame, the arrays arranged such that they lie in the path of energy transmitted from one of the second pair of opposite sides of the frame.

7. An optical input device, as claimed in claim 6, wherein: the first and second energy guides comprise optical fibres.

8. An optical input device, as claimed in claim 7, wherein: the first energy guide is connected at one end to the energy emitter such that energy from the energy emitter enters the first energy guide and travels the length of the first energy guide; the first energy guide is connected at the other end to the first pair of orthogonal sides such that the first pair of orthogonal sides do not obstruct the energy when the energy exits the first energy guide;
the fibers of the first energy guide are connected such that energy exiting the first energy guide is transmitted from along the length of the first pair of orthogonal sides;
the second energy guide is connected at one end to the second pair of orthogonal sides, the fibers of the second energy guide are arranged such that energy received along substantially the length of the second pair of orthogonal sides, from the first pair of orthogonal sides; and
the second energy guide is connected at the other end to the detector such that energy traveling through the second energy guide is detected by the detector.

9. An optical input device, as claimed in claim 8, wherein:
the fibers of the first energy guide further connected such that energy exiting the first energy guide is transmitted perpendicular to the surfaces of the first pair of orthogonal sides, and toward the second pair of orthogonal sides.

10. An optical input device, as claimed in claim 7, wherein:
the energy emitter produces energy in the infrared range;
the energy detector detects energy in the infrared range.

11. A method for detecting and communicating to a computer the location of an input member within a predetermined field, the method including:
defining the field using a frame having first and second pairs of orthogonal sides;
interposing a first mask comprising a linear array of addressable mask elements between a first pair of opposite sides of the frame;
interposing a second mask comprising a linear array of addressable mask elements between a second pair of opposite sides of the frame;
selectively addressing, using a multiplexor, the elements of the first and second masks to allow or block transmission of energy across the field and
identifying, the position within the field of an input member by an absence of detected energy;
the method characterised by :
transporting, along a first energy guide (264) connected at one end to a single emitter (260) and extending along the first pair of orthogonal sides, energy from the emitter (260) to the first pair of orthogonal sides; and
transporting, along a second energy guide (266) connected at one end to a single detector (262) and extending along the second pair of orthogonal sides, energy from the second pair of orthogonal sides to the detector (262).

## Patentansprüche

1. Optische Vorrichtung zum Erfassen der Position eines Eingabeglieds innerhalb eines vorgegebenen Feldes, wobei die Vorrichtung beinhaltet: Einen Rahmen mit einem ersten und einem zweiten Paar senkrecht aufeinanderstehender Seiten; ein Energieabstrahlmittel (260); ein Energiedetektormittel (262); eine erste Maske (268) beinhaltend eine lineare Anordnung adressierbarer Maskenelemente, die zwischen einem ersten Paar einander gegenüberliegender Seiten des Rahmens angeordnet sind; eine zweite Maske (270) beinhaltend eine lineare Anordnung adressierbarer Maskenelemente, die zwischen einem zweiten Paar einander gegenüberliegender Seiten des Rahmens angeordnet sind; und einen Multiplexer, der an die Masken zwecks selektiven Adressierens der Elemente der ersten und der zweiten Maske angeschlossen ist, um die Energieübertragung vom Abstrahlmittel (260) über das Feld zum Energiedetektormittel (262) zuzulassen bzw. zu sperren, wobei das Energiedetektormittel (262) die Position eines Eingabemittels im Feld durch Fehlen der erfaßten Energie identifiziert; dadurch gekennzeichnet, daß das Energieabstrahlmittel (260) einen einzigen Energieabstrahler (260) beinhaltet; das Energiedetektormittel (262) einen einzigen Energiedetektor (262) beinhaltet; und die Vorrichtung eine erste Energieführung (264) aufweist, die mit einem Ende an den einzigen Abstrahler (260) angeschlossen ist und sich entlang des ersten Paars der senkrecht aufeinanderstehenden Seiten zwecks Transport der Energie vom einzigen Abstrahler (260) zum ersten Paar senkrecht aufeinanderstehender Seiten erstreckt, und eine zweite Energieführung (266) aufweist, die mit einem Ende an den einzigen Detektor (262) angeschlossen ist und sich entlang des zweiten Paars senkrecht aufeinanderstehender Seiten zum Transport der Energie von zweiten Paar senkrecht aufeinanderstehender Seiten zum einzigen Signaldetektor (262) erstreckt.

2. Optische Eingabevorrichtung gemäß Anspruch 1, in der der Multiplexer ferner beinhaltet: Mittel zur synchronen Abtastung der ersten Maske, um einen Energiestrahl zu jedem beliebigen Zeitpunkt zwischen dem ersten Paar einander gegenüberliegender Seiten fließen zu lassen, und Mittel zur synchronen Abtastung der zweiten Maske, so daß nur ein dünner Energiestrahl zu jedem beliebigen Zeitpunkt zwischen dem zweiten Paar einander gegenüberliegender Seiten fließen kann.

3. Optische Eingabevorrichtung gemäß Anspruch 2, in der der Multiplexer ferner beinhaltet: Mittel zum Empfangen von Steuersignalen von einem Rechner; Mittel zum Steuern einer selektiven Energieübertragung durch die erste und die zweite Maske als Funktion der Steuersignale, die vom Rechner her eingehen.

4. Optische Eingabevorrichtung gemäß Anspruch 3, in der der Multiplexer ferner beinhaltet:
Mittel zum Maskieren aller Seiten des zweiten Paars einander gegenüberliegender Seiten, wenn die erste Maske abgetastet wird, und Mittel zum Maskieren aller Seiten des ersten Paars einander gegenüberliegender Seiten, wenn die zweite Maske abgetastet wird.

5. Optische Eingabevorrichtung gemäß Anspruch 1, in der die erste und die zweite Maske LCD-Schaltkreise sind.

6. Optische Eingabevorrichtung gemäß Anspruch 5, in der die erste Maske beinhaltet:
erste und zweite lineare Anordnungen von Maskenelementen die jeweils am ersten Paar einander gegenüberliegender Seiten des Rahmens befestigt sind, wobei die Anordnungen so angeordnet sind, daß sie im Pfad der Energie liegen, die von einer der ersten einander gegenüberliegender Seiten abgestrahlt wird; und wobei die zweite Maske erste und zweite lineare Anordnungen von Maskenelementen aufweist, die jeweils an das zweite Paar einander gegenüberliegender Seiten des Rahmens befestigt sind, wobei die Anordnungen so angeordnet sind, daß sie im Pfad der Energie liegen, die von einer des zweiten Paars der einander gegenüberliegenden Seiten des Rahmens her transportiert wird.

7. Optische Eingabevorrichtung gemäß Anspruch 6, in der die ersten und die zweiten Energieführungen Optikfasern enthalten.

8. Optische Eingabevorrichtung gemäß Anspruch 7, in der die erste Energieführung mit einem Ende an den Energieabstrahler gelegt ist, so daß Energie vom Energieabstrahler in die erste Energieführung eintritt und entlang der ersten Energieführung fließt; die erste Energieführung mit dem anderen Ende an das erste Paar senkrecht aufeinanderstehender Seiten angeschlossen ist, so daß das erste Paar senkrecht aufeinanderstehender Seiten die Energie nicht behindert, wenn sie aus der ersten Energieführung austritt;
die Fasern der ersten Energieführung so angeschlossen sind, daß Energie, die aus der ersten Energieführung austritt, entlang der Länge des ersten Paars der senkrecht aufeinanderstehenden Seiten übertragen wird;
die zweite Energieführung mit einem Ende an das zweite Paar senkrecht aufeinanderstehender Seiten angeschlossen ist, die Fasern der zweiten Energieführung so angeordnet sind, daß die aufgenommene Energie im wesentlichen entlang der Länge des zweiten Paars senkrecht aufeinanderstehender Seiten vom ersten Paar senkrecht aufeinanderstehender Seiten fließt; und
die zweite Energieführung mit dem anderen Ende an den Detektor angeschlossen ist, so daß die durch die zweite Energieführung fließende Energie vom Detektor erfaßt wird.

9. Optische Eingabevorrichtung gemäß Anspruch 8, in der
die Fasern der ersten Energieführung ferner so angeschlossen sind, daß Energie, die aus der ersten Energieführung austritt, senkrecht zu den Oberflächen des ersten Paars senkrecht aufeinanderstehender Seiten, und zum zweiten Paar senkrecht aufeinanderstehender Seiten übertragen wird.

10. Optische Eingabevorrichtung gemäß Anspruch 7, in der:
Der Energieabstrahler Energie im Infrarotbereich erzeugt;
der Energiedetektor Energie im Infrarotbereich erfaßt.

11. Verfahren zum Erfassen der Stelle eines Eingangsgliedes in einem vorgegebenen Feld und Übermitteln derselben an einen Rechner, wobei dieses Verfahren beinhaltet:
Definieren des Feldes unter Verwendung eines Rahmens mit einem ersten und einem zweiten Paar senkrecht aufeinanderstehender Seiten;
Zwischensetzen einer ersten Maske enthaltend eine lineare Anordnung adressierbarer Maskenelemente zwischen ein erstes Paar einander gegenüberliegender Seiten des Rahmens;
Zwischensetzen einer zweiten Maske enthaltend eine lineare Anordnung adressierbarer Maskenelemente zwischen ein zweites Paar einander gegenüberliegender Seiten des Rahmens;
selektives Adressieren der Elemente der ersten und der zweiten Maske unter Verwendung eines Multiplexers, um eine Energieübertragung über das Feld zuzulassen oder zu sperren; und
Identifizieren der Position eines Eingabeglieds innerhalb des Feldes wenn keine Energie erfaßt wird;
wobei dieses Verfahren gekennzeichnet ist durch:
Transportieren von Energie aus dem Abstrahler (260) entlang einer ersten Energieführung (264), die mit einem Ende an einen einzigen Abstrahler (260) angeschlossen ist und sich entlang einem ersten Paar senkrecht aufeinanderstehender Seiten erstreckt, zum ersten Paar senkrecht aufeinanderstehender Seiten; und
Transportieren von Energie entlang einer zweiten Energieführung (266), die mit einem Ende an einen einzigen Detektor (262) angeschlossen ist und sich entlang einem zweiten Paar senkrecht aufeinanderstehender Seiten erstreckt, aus dem zweiten Paar senkrecht aufeinanderstehender Seiten zum Detektor (262).

## Revendications

1. Dispositif optique pour détecter la position d'un élément d'entrée dans un champ prédéterminé, le dispositif comprenant : un cadre ayant une première et une seconde paires de côtés orthogonaux ; des moyens d'émission d'énergie (260) ; des moyens de détection d'énergie (262) ; un premier masque (268) comprenant un réseau linéaire d'éléments de masque adressables interposés entre une première paire de côtés opposés du cadre ; un second masque (270) comprenant un réseau linéaire d'éléments de masque adressables interposés entre une seconde paire de côtés opposés du cadre ; et un multiplexeur connecté aux masques pour adresser de façon sélective les éléments des premier et second masques pour autoriser ou bloquer la transmission d'énergie des moyens d'émission (260) à travers le champ vers les moyens de détection d'énergie (262), les moyens de détection d'énergie (262) identifiant la position à l'intérieur du champ, d'un élément d'entrée, par une absence d'énergie détectée ; caractérisé en ce que : les moyens d'émission d'énergie (260) comprennent un émetteur d'énergie unique (260) ; les moyens de détection d'énergie (262) comprennent un détecteur d'énergie unique (262) ; et le dispositif comporte un premier guide d'énergie (264) connecté à une extrémité à l'émetteur unique (260) et s'étendant le long de la première paire de côtés orthogonaux pour transporter l'énergie de l'émetteur unique (260) vers la première paire de côtés orthogonaux, et un second guide d'énergie (266) connecté à une extrémité au détecteur unique (262) et s'étendant le long de la seconde paire de côtés orthogonaux pour transporter l'énergie de la seconde paire de côtés orthogonaux vers le détecteur de signal (262).

2. Dispositif d'entrée optique, tel que revendiqué dans la revendication 1, dans lequel le multiplexeur comporte en outre : des moyens pour balayer de façon synchrone le premier masque pour autoriser un faisceau d'énergie à se déplacer entre la première paire de côtés opposés à un instant quelconque ; et des moyens pour balayer de façon synchrone le second masque de sorte que seul un faisceau d'énergie étroit puisse se déplacer entre la seconde paire de côtés opposés à un instant quelconque.

3. Dispositif d'entrée optique, tel que revendiqué dans la revendication 2, dans lequel le multiplexeur comporte en outre : des moyens pour recevoir des signaux de commande d'un ordinateur ; des moyens pour commander une transmission d'énergie sélective à travers les premier et second masques en fonction des signaux de commande reçus de l'ordinateur.

4. Dispositif d'entrée optique, tel que revendiqué dans la revendication 3, dans lequel le multiplexeur comporte en outre :
des moyens pour masquer l'intégralité de la seconde paire de côtés opposés lorsque le premier masque est balayé, et pour masquer l'intégralité de la première paire de côtés opposés lorsque le second masque est balayé.

5. Dispositif d'entrée optique, tel que revendiqué dans la revendication 1, dans lequel les premier et second masques sont des circuits LCD.

6. Dispositif d'entrée optique, tel que revendiqué dans la revendication 5, dans lequel le premier masque comporte :
des premier et second réseaux linéaires d'éléments de masque attachés respectivement à chacun des côtés de la première paire de côtés opposés du cadre, les réseaux étant arrangés de manière à être situés dans le chemin de l'énergie transmise à partir d'un côté de la première paire de côtés opposés ; et dans lequel le second masque comporte des premier et second réseaux linéaires d'éléments de masque attachés respectivement à chacun des côtés de la seconde paire de côtés opposés du cadre, les réseaux étant disposés de façon à être situés dans le chemin de l'énergie transmise à partir d'un côté de la seconde paire de côtés opposés du cadre.

7. Dispositif d'entrée optique, tel que revendiqué dans la revendication 6, dans lequel : les premier et second guides d'énergie comportent des fibres optiques.

8. Dispositif d'entrée optique, tel que revendiqué dans la revendication 7, dans lequel : le premier guide d'énergie est connecté à une extrémité à l'émetteur d'énergie de sorte que l'énergie provenant de l'émetteur d'énergie entre dans le premier guide d'énergie et se déplace le long du premier guide d'énergie ; le premier guide d'énergie étant connecté à l'autre extrémité à la première paire de côtés orthogonaux de sorte que la première paire de côtés orthogonaux ne fasse pas obstacle à l'énergie lorsque l'énergie quitte le premier guide d'énergie ;
les fibres du premier guide d'énergie sont connectées de telle manière que l'énergie quittant le premier guide d'énergie est transmise à partir de la longueur de la première paire de côtés orthogonaux ;
le second guide d'énergie est connecté à une extrémité à la seconde paire de côtés orthogonaux, les fibres du second guide d'énergie sont disposées de sorte que l'énergie soit reçue sensiblement le long de la longueur de la seconde paire de côtés orthogonaux, de la première paire de côtés orthogonaux ; et
le second guide d'énergie est connecté à l'autre extrémité au détecteur de sorte que l'énergie se déplaçant à travers le second guide d'énergie est détectée par le détecteur.

9. Dispositif d'entrée optique, tel que revendiqué dans la revendication 8, dans lequel :
les fibres du premier guide d'énergie sont en outre connectées de façon à ce que l'énergie quittant le premier guide d'énergie est transmise de façon perpendiculaire aux surfaces de la première paire de côtés orthogonaux, et vers la seconde paire de côtés orthogonaux.

10. Dispositif d'entrée optique, tel que revendiqué dans la revendication 7, dans lequel :
l'émetteur d'énergie produit de l'énergie dans la zone infrarouge ;
le détecteur d'énergie détecte l'énergie dans la zone infrarouge.

11. Procédé pour détecter et communiquer à un ordinateur la localisation d'un élément d'entrée à l'intérieur d'un champ prédéterminé, ce procédé comprenant les étapes consistant à :
définir le champ en utilisant un cadre ayant une première et une seconde paires de côtés orthogonaux ;
interposer un premier masque comprenant un réseau linéaire d'éléments de masque adressables entre une première paire de côtés opposés du cadre ;
interposer un second masque comprenant un réseau linéaire d'éléments de masque adressables entre une seconde paire de côtés opposés du cadre ;
adresser de façon sélective, en utilisant un multiplexeur, les éléments des premier et second masques pour autoriser ou bloquer la transmission d'énergie à travers le champ ; et
identifier la position à l'intérieur du champ d'un élément d'entrée par une absence d'énergie détectée ;
le procédé étant caractérisé par le fait de :
transporter le long d'un premier guide d'énergie (264) connecté à une extrémité à un émetteur unique (260) et s'étendant le long de la première paire de côtés orthogonaux, l'énergie de l'émetteur (260) vers la première paire de côtés orthogonaux ; et
transporter le long d'un second guide d'énergie (266) connecté à une extrémité à un détecteur unique (262) et s'étendant le long de la seconde paire de côtés orthogonaux, l'énergie de la seconde paire de côtés orthogonaux vers le détecteur (262).
